# EUROPEAN PATENT SPECIFICATION

(11) **EP 2 647 650 B1**
(45) Date of publication and mention of the grant of the patent: **17.06.2015**
(21) Application number: 12002397.3
(22) Date of filing: 02.04.2012
(51) Int. Cl.: C08F 210/02, C08F 2/00

(54) **High-pressure radical ethylene co-polymerization process with a reduced temperature of the reaction mixture prior to introduction into the reaction zone**
Hochdruck-Radikal-Ethylen-Copolymerisationsprozess mit einer verringerten Temperatur des Reaktionsgemischs vor der Einleitung in die Reaktionszone
Procédé de copolymérisation d'éthylène radical à haute pression avec une température réduite du mélange réactionnel préalablement à son introduction dans la zone de réaction

(43) Date of publication of application: 09.10.2013
(73) Proprietor: Borealis AG, 1220 Vienna (AT)
(72) Inventor: Bergqvist, Mattias, SE-416 74 Göteborg (SE); Johansson, Kenneth, SE-444 45 Stenungsund (SE); Voigt, Björn, SE-422 43 Hisings Backa (SE); Magnusson, Torbjörn, SE-444 46 Stenungsund (SE); Hjertberg, Thomas, SE-456 91 Kungshamn (SE)
(74) Representative: Kador & Partner

(56) References cited:
- WO-A1-93/08222
- WO-A1-2009/012041
- WO-A1-2011/057926
- WO-A1-2011/057928

## Description

The invention relates to a high-pressure radical ethylene copolymerization process wherein ethylene is copolymerised with a polyunsaturated compound and the maximum temperature of the reaction mixture prior to introduction into the reaction zone is 160 °C or less.

In high pressure radical ethylene polymerization reactions ethylene monomers and, optionally, comonomers, such as polyunsaturated comonomers are polymerized under very high pressure, which is usually above 100 MPa. The radical polymerization reaction is started by the use of a radical initiator such as O₂ or a peroxide.

It is often necessary to heat the compressed reaction mixture in order to reach a temperature suitable for the radical initiator to decompose and, thus, start the polymerisation reaction. This is normally done by passing the reaction mixture (not yet comprising the radical initiator) through a pre-heater, e.g. heated tubes. In spite no radical initiator is present in the pre-heater, it has been observed that often polymerization occurrs at the walls of the pre-heater yielding a thin polymer film covering the wall. Such a film reduces heat transfer efficiency. In the following this is denoted "pre-heater fouling". In case this fouling grows rapidly without being removed, e.g. by the process stream, the average temperature of the reaction mixture entering the reactor is decreasing. Said average temperature may even drop below the desired decomposition temperature of the radical initiator. Hence, the initiator is not able to form free radicals at the desired rate and, thus, the rate of polymerization in the reactor where the reaction mixture is fed into may be greatly reduced or the reaction may even completely stop. Passing unreacted radical initiator through the reactor is a major safety concern as the polymerisation reaction may be initiated at undesired locations within the reactor.

In case of a polyunsaturated comonomer having at least two non-conjugated double bonds usually only one of the double bonds is incorporated into the main polymer chain during polymerisation whereby the other(s) remain unaffected and, thus, increase the double-bond content of the polymer. Such an increased double-bond content improves the cross-linking properties of the polymer. It has been observed that fouling may already occur in pure ethylene feeds. However, in case the reaction mixture is containing polyunsaturated comonomers, the reaction mixture is even more prone to fouling, e.g. pre-heater fouling, compared with pure ethylene feed.

Thus, there is the need for an ethylene polymerization process wherein fouling, such as pre-heater fouling, is avoided or at least reduced.

WO 2011/057928 discloses a crosslinked polymer composition comprising a crosslinked polyolefin, wherein ethylene is compressed to reach initial reaction pressure. In the compressor area also propionaldehyde was added together with propylene as chain transfer agents. Here also 1,7-octadiene was addled.

It has been surprisingly found that the above object can be achieved by a maximum temperature of the reaction mixture prior to introduction into the reaction zone of 150 °C or less.

Thus, the present invention provides a high-pressure radical ethylene copolymerization process in which ethylene is co-polymerized with
- a polyunsaturated olefin comprising at least 6 carbon atoms and at least two non-conjugated double bonds of which at least one is terminal; and/or
- an alpha-omega-divinylsiloxane according to Formula I 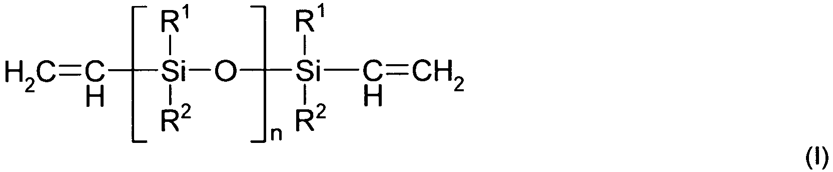 wherein R¹ and R², which can be alike or different, are selected among alkyl groups having 1-4 carbon atoms and alkoxy groups having 1-4 carbon atoms, and n is 1 -200, whereby the high pressure radical ethylene polymerization reaction is performed in a tubular reactor,
characterized in that the reaction mixture is heated before entering the reaction zone and the maximum temperature of the reaction mixture prior to introduction into the reaction zone is 150 °C or less.

The pre-heater fouling is considered to be due to impurities contained in the reaction mixture originating from the polyunsaturated compound.

In the present invention the term "polyunsaturated compound" encompasses polyunsaturated olefin comprising at least 6 carbon atoms and at least two non-conjugated double bonds of which at least one is terminal and alpha-omega-divinylsiloxanes according to Formula I.

By the process of the present invention the temperature of the reaction mixture prior to adding the radical initiator is more stable and, in turn, stable reaction conditions can be maintained which lead to more homogenous product properties. Furthermore, the safety is improved as the radical initiator decomposes where desired. In addition, it is not necessary to modify the process conditions during the process depending on the varying temperature of the reaction mixture prior to adding the radical initiator, i.e. the initiator feed.

Methods to determine the temperature of the reaction mixture are known in the art. Usually the temperature is measured inside the vessel the reaction mixture is located in and at a distance to the walls of the vessels of 2 cm or more. For measuring the temperature a probe, such as a thermocouple, can be used.

In case of circular objects, such as tubes, the temperature is usually measured inside the vessel at a distance to the walls of the vessel of at least 1/10 of the inner diameter of the vessel. As will be readily appreciated, the maximum distance to the walls of a circular vessel is 1/2 of the vessels inner diameter, preferably, the maximum distance to the walls of a circular vessel are 1/3 of the diameter of the vessel or less.

In the present invention the reaction mixture comprises ethylene, the polyunsaturated compound and, optionally, one or more of the further compounds described herein.

In the present invention the term "polymerisation process" denotes that two or more different monomers are co-polymerised in the process. Hence, in the polymerisation process of the present invention also three, four or more different co-monomers may be co-polymerised.

Consequently, the polyethylene produced in the process of the present invention may contain two or more different co-monomers.

Usually not more than five different co-monomers are used in the polymerisation process of the present invention, preferably not more than four different co-monomers and most preferably not more than three different co-monomers.

Furthermore, usually in a high pressure ethylene polymerization plant more than one product with differing compositions is produced in a continuous manner. It is desirable that the switching of the production from one product to another product can be done as fast as possible, so that as little production time as possible is lost and as little as possible intermediate products, which do not meet the specification of any of the first or second product, are produced.

When switching from one product to another, the residues present in the pre-heater fouling layers may separate from the walls and contaminate the product obtained. Thus, more time is needed until the polymer obtained from the plant meets the specification of the second product. Thus, by reducing or even avoiding pre-heater fouling the switching time is reduced. The switching time is defined to be the time from when the last polymer product in accordance with the specification for the first product is obtained until the first polymer with the specification for the second product is obtained. Thus, with the processes of the two embodiments of the invention switching from one product to another is faster. Polymerization of ethylene (co)polymers by free radical initiated polymerization at high pressure (referred to as high pressure radical polymerization) is since long known in the art. Generally, the polymerization is performed reacting the monomers under the action of one or more radical initiators such as, peroxides, hydroperoxides, and oxygen or azo compounds, usually oxygen, peroxides, or azo compounds are used, in a reactor at a temperature of 80 to 350°C and at a pressure of 100 to 500 MPa.

Usually and preferably, the polymerization is carried out in a tubular reactor, commonly in a continuous manner.

Generally, monomer conversion is higher in a tubular reactor than in an autoclave reactor. Furthermore, by polymerization in a tubular reactor, ethylene (co)polymers with a branching structure well suited for cross-linking thereof can be provided.

Tubular reactors are either single-feed or multi-feed reactors, including split-feed reactors. In a single-feed tubular reactor (also referred to as front-feed reactor), the total monomer flow is fed to the inlet of the first reaction zone. In a multi-feed tubular reactor, the monomers are fed into the reactor at several locations along the reactor. In a split-feed reactor, the compressed monomer mixtures are split into two streams and fed into the reactor at different locations thereof.

Tubular reactors include one or more reaction zones. Reaction is started in each zone by injection of a radical initiator. Prior to the first zone, the reaction mixture is usually passed through a pre-heater in order to reach a temperature suitable for initiation of the first zone. Upon injection of the radical initiator, a first reaction temperature peak is obtained by the exothermal polymerization. The temperature of the reaction mixture then decreases by cooling through the tube walls while the monomer and polymer reaction mixture is flowing along the first reaction zone. The next reaction zone is defined by, again, injection of a radical initiator upon which a second reaction temperature peak and a subsequent decrease in temperature of the reaction mixture along the second reaction zone is obtained. The number of initiator injection points thus determines the number of reaction zones. A tubular reactor for the production of ethylene copolymers by high pressure radical polymerization usually comprises a total of two to five reaction zones.

After the end of the last reaction zone, the temperature and pressure of the reaction mixture including the reaction product are lowered, typically in two steps using a high pressure separator and a low pressure separator. The resulting polymer product is recovered and unreacted monomers are usually recycled back to the reactor. Further details on the production of ethylene (co)polymers by high pressure radical polymerization can be found in "Encyclopedia of Polymer Science and Engineering", Vol. 6, (1986), pages 383 to 410.

As already outlined above, in case the polymerisation is carried out in a tubular reactor, the reaction mixture comprising ethylene and the polyunsaturated compound is usually preheated before entering the reaction zone. The pre-heating is normally effected by a pre-heater upstream of the reactor.

However, the reaction mixture comprising ethylene and the polyunsaturated compound may also be pre-heated prior to introduction into the reaction zone in case the process is not carried out in a tubular reactor.

Preferably, the maximum temperature of the reaction mixture prior to introduction into the reaction zone is 150 °C or less, more preferably the maximum temperature of the reaction mixture prior to introduction into the reaction zone is 140 °C or less. Usually the temperature is at least 80 °C, more frequently at least 100 °C.

In case more than one reaction zone is present, the term "the reaction zone" refers to the first reaction zone where radical initiator is added. Usually, the reaction zone(s) are located in a reactor. In such a case the maximum temperature is 160°C preferably 150 °C or less, more preferably is 140 °C or less prior to introduction of the reaction mixture into the reactor.

The pressure in the pre-heater is similar to that in the zone of the reactor where the reaction mixture is fed to. In this respect "similar" denotes that the pressure in the pre-heater is ± 10% of the pressure in the first reaction zone of the reactor.

To determine whether a reaction mixture is likely to cause pre-heater fouling, the reaction mixture which is fed to the reactor (without the radical initiator) is subjected to pre-heater conditions and the grade of conversion (i.e. polymerisation/oligomerisation) is determined. As the whole mixture which is also present prior to feeding the radical initiator is tested it can be reliably determined which grade of conversion occurs at which temperature and, thus, a suitable polyunsaturated olefin grade can be easily determined with a few experiments. This method is denoted "zero conversion test" and described in detail in the experimental part.

Preferably the pre-heater conditions used yields a percentage of less than 6.0 % in the zero conversion test, more preferably the pre-heater conditions used yields a percentage of less than 5.0 % in the zero conversion test, even more preferably the pre-heater conditions used yields a percentage of less than 4.0 % in the zero conversion test and most preferably the pre-heater conditions used yields a percentage of less than 2.0 % in the zero conversion test.

Preferably, the polyunsaturated olefin comprises at least 7 carbon atoms, more preferably at least 8 carbon atoms. The polyunsaturated olefin usually comprises 30 carbon atoms or less.

The polyunsaturated olefin is preferably a C₆- to C₂₀-olefin, more preferably the polyunsaturated olefin is a C₆- to C₁₆-olefin.

Non-conjugated denotes that there is at least one atom present between the atoms of two different double bonds. Preferably, at least two, more preferably at least three and most preferably at least four atoms are present between the atoms of two different double bonds. These atoms present between the carbon atoms of two different double bonds are preferably carbon atoms.

Preferably all double bonds in the polyunsaturated olefin are carbon-carbon double bonds.

The polyunsaturated olefin usually comprises not more than four non-conjugated double bonds, preferably not more than three non-conjugated double bonds and most preferably two non-conjugated double bonds, i.e. is a diene.

Furthermore, the polyunsaturated olefin preferably has a linear carbon chain.

The polyunsaturated olefin is preferably free of heteroatoms.

Preferably all double bonds in the polyunsaturated olefin are terminal double bonds.

Most preferably the polyunsaturated olefin is selected from 1,7-octadiene, 1,9-decadiene, 1,11-dodecadiene 1,13-tetradecadiene, 7-methyl-1,6-octadiene, 9-methyl-1,8-decadiene, or mixtures thereof, more preferably from 1,7-octadiene, 1,9-decadiene, 1,11-dodecadiene and 1,13-tetradecadiene.

Besides non-conjugated double bonds the polyunsaturated compound may comprise conjugated double bonds but is preferably free of conjugated double-bonds.

Further preferred embodiments of the polyunsaturated olefin are all those as described in WO 93/08222.

Particularly preferred is 1,7-octadiene.

In the alpha-omega-divinylsiloxane -divinylsiloxane according to Formula I 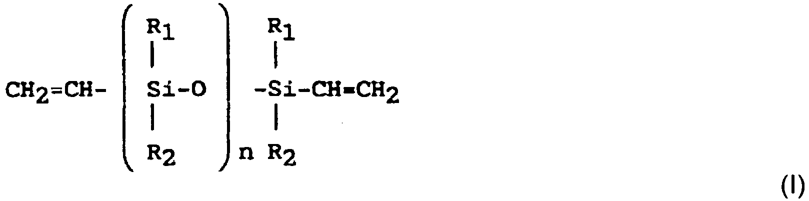 preferably, n is 1-200 and in view of commercial accessibility, in particular n is 1-100. More specifically, n is 1-50 owing to the higher addition of double bonds in proportion to the weight content of siloxane comonomer included in the copolymer.

It has been found advantageous that R₁ and R₂ are alike. Most advantageously, R₁ and R₂ are methyl, methoxy or ethoxy.

Examples of suitable alpha-omega-divinylsiloxanes are tetramethyl divinyldisiloxane and divinyl poly(dimethylsiloxanes).

However, preferably a polyunsaturated olefin comprising at least 6 carbon atoms and at least two non-conjugated double bonds of which at least one is terminal is used in the process.

Usually, in high pressure radical ethylene polymerization processes, a chain transfer agent is used in order to control the molecular weight of the produced polymer. Chain transfer agents may be non-polar compounds, e.g. straight chain or branched alpha-olefins with three to six carbon atoms such as propylene, or may be polar compounds being e.g. straight-chain or branched saturated compounds having a group with an heteroatom such as N, S, O, e.g. an hydroxyl, carbonyl, carboxyl, alkoxy, aldehyde, ester, nitrile or sulfide group.

Hence, the reaction mixture preferably comprises a chain transfer agent.

The chain transfer agent is preferably selected from aldehydes, ketones, alcohols, saturated hydrocarbons, alpha-olefins or mixtures thereof, more preferably the chain transfer agent is selected from propionaldehyde, methylethylketon, propylene, isopropylalcohol or mixtures thereof.

Preferably the chain transfer agent is present in the reaction mixture fed into the reaction zone in a concentration of at least 0.01 wt.%, more preferably of at least 0.1 wt.%, even more preferably of at least 0.2 wt.% based on the total weight of the reaction mixture.

The chain transfer agent preferably present in the reaction mixture fed into the reaction zone in a concentration of 10 wt.% or less, more preferably of 7 wt.% or less and most preferably of 5 wt.% or less based on the total weight of the reaction mixture.

Preferably the polyunsaturated compound is present in the reaction mixture fed into the reaction zone in a concentration of at least 0.01 wt.%, more preferably of at least 0.03 wt.%, even more preferably of at least 0.06 wt.% based on the total weight of the reaction mixture.

The polyunsaturated compound is preferably present in the reaction mixture fed into the reaction zone in a concentration of 5.0 wt.% or less, more preferably of 3.0 wt.% or less and most preferably of 2.0 wt.% or less based on the total weight of the reaction mixture.

Usually ethylene is present in the reaction mixture fed to the reaction zone in a concentration of 85 wt.% or more.

In case a pre-heater is present, the foregoing contents of polyunsaturated olefin preferably refer to the content when exiting the pre-heater. In case no pre-heater is present, the foregoing contents of polyunsaturated olefin and ethylene preferably refer to the content of the reaction mixture at the moment the radical initiator is added but the reaction has not started.

The copolymerisation may be implemented in the presence of one or more other comonomers which can be copolymerised with the two monomers. Such olefinically, advantageously vinylically, unsaturated comonomers include (a) vinyl carboxylate esters, such as vinyl acetate and vinyl pivalate, (b) alpha-olefins, such as propene, 1-butene, 1-hexene, 1-octene and 4-methyl-1-pentene, (c) (meth)acrylates, such as methyl(meth)-acrylate, ethyl(meth)acrylate and butyl(meth)acrylate, (d) olefinically unsaturated carboxylic acids, such as (meth)acrylic acid, maleic acid and fumaric acid, (e) (meth)acrylic acid derivatives, such as (meth)acrylonitrile and (meth)acrylic amide, (f) vinyl ethers, such as vinyl methyl ether and vinyl phenyl ether, and (g) aromatic vinyl compounds, such as styrene and alpha-methyl styrene.

The copolymerisation with other comonomers besides the polyunsaturated compound is applied in particular when it is desired to make a crosslinkable polymer composition less crystalline, more polar, or both. In that case the comonomer (or termonomer) should include at least one polar group, such as a siloxane, a silane, an amide, an anhydride, a carboxylic, a carbonyl, an acyl, a hydroxyl or an ester group.

Examples of such comonomers include group (a), (c), (d), (e), and (f) mentioned above.

Amongst these comonomers, vinyl esters of monocarboxylic acids having 1-4 carbon atoms, such as vinyl acetate, and (meth)acrylate of alcohols having 1-4 carbon atoms, such as methyl(meth)acrylate, are preferred. Especially preferred comonomers are butyl acrylate, ethyl acrylate and methyl acrylate. Two or more such olefinically unsaturated compounds may be used in combination. As used herein, the term "(meth)acrylic acid" is meant to encompass acrylic acid as well as methacrylic acid.

The present invention is furthermore directed to an ethylene polymer obtainable in the process according to all of the above described embodiments of the invention.

The present invention is furthermore directed to a composition obtainable by cross-linking of the ethylene polymer obtainable in the process according to all of the above described embodiments of the invention.

The present invention is also directed to a cable comprising the ethylene polymer and/or the composition according to the invention.

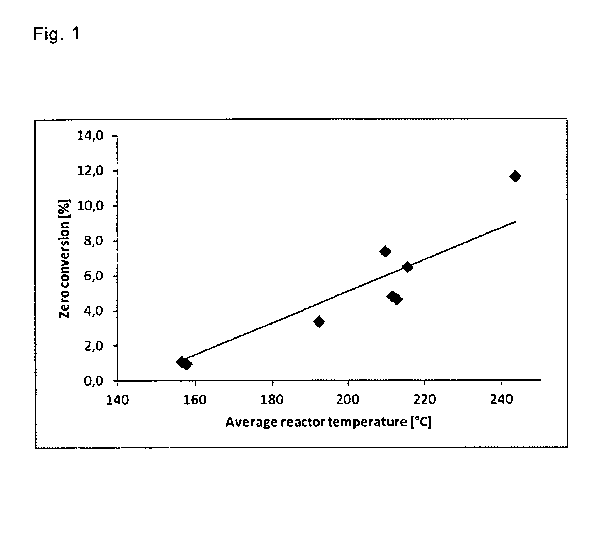

Fig. 1 shows the temperature dependency of the zero conversion

The present invention will be further illustrated by the examples described below.

### Methods and Examples

### Zero conversion test

A set-up consisting of a multi-stage compressor, a continuously stirred tank reactor (CSTR) and a fine valve to control the pressure is used. The inner volume of the reactor is approximately 50 ml as described in
- Buback, M.; Busch, M.; Lovis, K.; Mahling, F-O.; Chemie Ingenieur Technik (67) no. 12 p. 1652-1655; and
- Buback, M.; Busch, M.; Lovis, K.; Mahling, F-O. Chem.-Ing.-Tech. 66 (1994) no. 4, p 510-513.

Electrical heating coils allows for heating of the reactor walls to a desired temperature prior to each experiment and hence conditions similar to a pre-heater in a plant can be obtained. No free radical initiator, e.g. peroxide, oxygen etc. is added. Conversion is calculated as the average weight of polymer formed per time unit divided by the feed rates of the reactants.

The reactor is preheated to the desired temperature (given in the examples below). A flow of 1000 g ethylene and 2,5 g propionaldehyde per hour is injected into the reactor until stable conditions are reached at a pressure of 200 MPa and an average reactor temperature of ~225°C. A flow of 4 g/h of polyunsaturated compound (e.g. 1,7 octadiene) and 4 g/h heptane (solvent) is then introduced into the reactor. Depending on the reactivity, the temperature in the reactor may increase. Conversion is calculated after obtaining steady state conditions in the reactor. In the present invention steady state conditions are obtained in case the temperature did not change more than +/-1.0°C over a period of 10 min.

It was found that when feeding only ethylene (99.75%) and propionaldehyde (0.25%) a zero conversion of typically ∼0.5-1 % was obtained. The heptane also exhibited a zero conversion in the same range. Here the total zero conversion is provided.

Gas purity is provided defined as wt.%.

The purity was deterimed with a Varian 450 gas chromatograph having an FID with Galaxie CDS and colon VF-1 ms, 60 m x 0.32 mm X 1.0 µm. 1 µl is injected and the GC % area of polyunsaturated compound (e.g. 1,7-octadiene) is calculated as purity. The method is applicable for all comonomers according to claim 1.
Injector temperature: 150°.
Temperature profile: 60°C for 10 min; 10°C increase per min up to 250°C; 250° for 2 min = 31 minutes total, He flow 1.0 ml/min.
Detector temperature: 250°C.
Detector range: X Make up flow 29 ml/min
Hydrogen flow 30 ml / min
Air flow 300 ml / min

### EXAMPLES

The zero conversion test was carried out under the conditions as outlined above.

The feed to the reactor had the following content.

| | |
|---|---|
| 98.95 wt.% | ethylene |
| 0.4 wt.% | 1,7-octadiene grade (97% Evonik) |
| 0.4 wt.% | heptane (diluent for 1,7-octadiene) |
| 0.25 wt.% | propionaldehyde, |

The propionaldehyde is added to control the molecular weight of the polymer.

The reactor pressure was 200 MPa and the temperature as indicated in figure 1.

Figure 1 shows the temperature dependency of the zero conversion. At 200 °C or less the conversion drops to around 4% which is acceptable for several pre-heaters. By further lowering the temperature the zero conversion is also lowered and, at 150 °C is negligible.

In the first run pure ethylene has been used as feed resulting in a zero conversion of 0.1 % at 230 °C.

## Claims

1. A high-pressure radical ethylene polymerization process in which ethylene is polymerized with
- a polyunsaturated olefin comprising at least 6 carbon atoms and at least two non-conjugated double bonds of which at least one is terminal; and/or
- an alpha-omega-divinylsiloxane according to Formula I 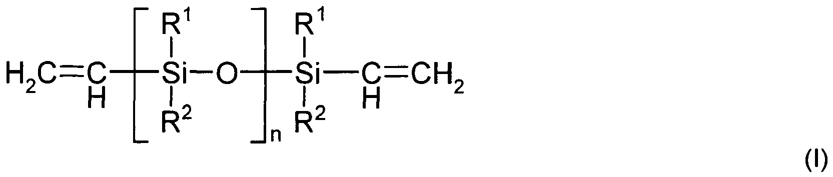 wherein R¹ and R², which can be alike or different, are selected among alkyl groups having 1-4 carbon atoms and alkoxy groups having 1-4 carbon atoms, and n is 1-200,
whereby the high pressure radical ethylene polymerization reaction is performed in a tubular reactor,
**characterized in that** the reaction mixture is heated before entering the reaction zone and the maximum temperature of the reaction mixture prior to introduction into the reaction zone is 150°C or less.

2. The process according to claim 1 wherein the maximum temperature of the reaction mixture prior to introduction into the reaction zone is 140 °C or less.

3. The process according to any of the preceding claims, wherein the polyunsaturated olefin is a C₆- to C₂₀-olefin.

4. The process according to any of the preceding claims, wherein the polyunsaturated olefin is a C₆- to C₁₆-olefin.

5. The process according to any of the preceding claims, wherein the polyunsaturated olefin has a straight carbon chain.

6. The process according to any of the preceding claims, wherein the polyunsaturated olefin is free of heteroatoms.

7. The process according to any of the preceding claims, wherein all double bonds in the polyunsaturated olefin are terminal double bonds.

8. The process according to any of the preceding claims, wherein the polyunsaturated olefin is selected from 1,7-octadiene, 1,9-decadiene, 1,11-dodecadiene, 1,13-tetradecadiene, 7-methyl-1,6-octadiene, 9-methyl-1,8-decadiene, or mixtures thereof.

9. The process according to any of the preceding claims, wherein the reaction mixture comprises a chain transfer agent which during the reaction may form primary radicals.

10. The process according to claim 9 wherein the chain transfer agent is selected from aldehydes, ketones, alcohols, saturated hydrocarbons, alpha-olefins or mixtures thereof.

11. The process according to claim 10, wherein the chain transfer agent is selected from propionaldehyde, methylethylketon, propylene, isopropylalcohol or mixtures thereof.

12. The process according to any of the preceding claims, wherein the polyunsaturated olefin is present in the reaction mixture fed into the reaction zone in a concentration of from 0.01 to 5 wt.% based on the total weight of the reaction mixture.

## Patentansprüche

1. Radikalisches Hochdruck-Ethylenpolymerisationsverfahren, in dem Ethylen polymerisiert wird mit:
- einem polyungesättigten Olefin, das mindestens 6 Kohlenstoffatome und mindestens zwei nicht-konjugierte Doppelbindungen umfasst, von denen mindestens eine endständig ist; und/oder
- einem alpha-omega-Divinylsiloxan entsprechend der Formel I 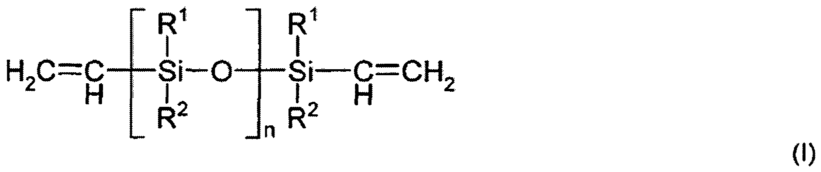 worin R¹ und R², die gleich oder verschieden sein können, aus Alkylgruppen, die 1-4 Kohlenstoffatome haben, und Alkoxygruppen, die 1-4 Kohlenstoffatome hat, ausgewählt sind und n 1-200 ist,
wobei die radikalische Hochdruck-Ethylenpolymerisationsreaktion in einem Röhrenreaktor durchgeführt wird,
**dadurch gekennzeichnet, dass** die Reaktionsmischung vor dem Eintreten in die Reaktionszone erwärmt wird und die Maximaltemperatur von der Reaktionsmischung vor dem Einführen in die Reaktionszone 150 °C oder weniger ist.

2. Verfahren nach Anspruch 1, wobei die Maximaltemperatur von der Reaktionsmischung vor dem Einführen in die Reaktionszone 140 °C oder weniger ist.

3. Verfahren nach einem der vorhergehenden Ansprüche, wobei das polyungesättigte Olefin ein C₆- bis C₂₀-Olefin ist.

4. Verfahren nach einem der vorhergehenden Ansprüche, wobei das polyungesättigte Olefin ein C₆- bis C₁₆-Olefin ist.

5. Verfahren nach einem der vorhergehenden Ansprüche, wobei das polyungesättigte Olefin eine gerade Kohlenstoffkette hat.

6. Verfahren nach einem der vorhergehenden Ansprüche, wobei das polyungesättigte frei von Heteroatomen ist.

7. Verfahren nach einem der vorhergehenden Ansprüche, wobei alle Doppelbindungen in dem polyungesättigten Olefin endständige Doppelbindungen sind.

8. Verfahren nach einem der vorhergehenden Ansprüche, wobei das polyungesättigte Olefin aus 1,7-Octadien, 1,9-Decadien, 1,11-Dodecadien, 1,13-Tetradecadien, 7-Methyl-1,6-octadien, 9-Methyl-1,8-decadien oder Mischungen davon ausgewählt ist.

9. Verfahren nach einem der vorhergehenden Ansprüche, wobei die Reaktionsmischung ein Kettenübertragungsmittel umfasst, welches während der Reaktion Primärradikale bilden kann.

10. Verfahren nach Anspruch 9, wobei das Kettenübertragungsmittel aus Aldehyden, Ketonen, Alkoholen, gesättigten Kohlenwasserstoffen, alpha-Olefinen oder Mischungen davon ausgewählt ist.

11. Verfahren nach Anspruch 10, wobei das Kettenübertragungsmittel aus Propionaldehyd, Methylethylketon, Propylen, Isopropylalkohol oder Mischungen davon ausgewählt ist.

12. Verfahren nach einem der vorhergehenden Ansprüche, wobei das polyungesättigte Olefin in der Reaktionsmischung, die in die Reaktionzone eingeführt wird, in einer Konzentration von 0,01 bis 5 Gew.-% vorliegt, basierend auf dem Gesamtgewicht der Reaktionsmischung.

## Revendications

1. Procédé de polymérisation d'éthylène par voie radicalaire à haute pression dans lequel l'éthylène est polymérisé avec
- une oléfine polyinsaturée comprenant au moins 6 atomes de carbone et au moins deux doubles liaisons non conjuguées dont au moins une est terminale ; et/ou
- un alpha-oméga-divinylsiloxane selon la formule (I) 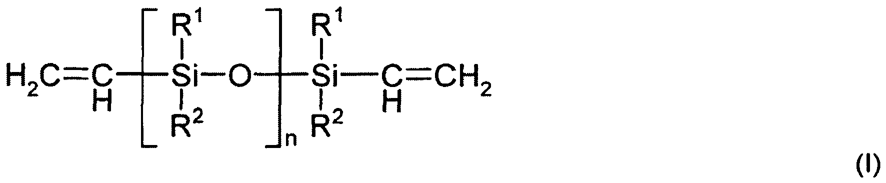 dans laquelle R¹ et R², qui peuvent être identiques ou différents, sont choisis parmi les groupes alkyle ayant de 1 à 4 atomes de carbone et les groupes alcoxy ayant de 1 à 4 atomes de carbone, et n vaut 1 à 200,
dans lequel la réaction de polymérisation d'éthylène par voie radicalaire à haute pression est réalisée dans un réacteur tubulaire,
**caractérisé en ce que** le mélange réactionnel est chauffé avant d'entrer dans la zone de réaction et la température maximale du mélange réactionnel avant l'introduction dans la zone de réaction est inférieure ou égale à 150 °C.

2. Procédé selon la revendication 1, dans lequel la température maximale du mélange réactionnel avant l'introduction dans la zone de réaction est inférieure ou égale à 140 °C.

3. Procédé selon l'une quelconque des revendications précédentes, dans lequel l'oléfine polyinsaturée est une oléfine en C₆ à C₂₀.

4. Procédé selon l'une quelconque des revendications précédentes, dans lequel l'oléfine polyinsaturée est une oléfine en C₆ à C₁₆.

5. Procédé selon l'une quelconque des revendications précédentes, dans lequel l'oléfine polyinsaturée a une chaîne carbonée linéaire.

6. Procédé selon l'une quelconque des revendications précédentes, dans lequel l'oléfine polyinsaturée est exempte d'hétéroatomes.

7. Procédé selon l'une quelconque des revendications précédentes, dans lequel toutes les doubles liaisons dans l'oléfine polyinsaturée sont des doubles liaisons terminales.

8. Procédé selon l'une quelconque des revendications précédentes, dans lequel l'oléfine polyinsaturée est choisie par le 1,7-octadiène, le 1,9-décadiène, le 1,11-dodécadiène, le 1,13-tétradécadiène, le 7-méthyl-1,6-octadiène, le 9-méthyl-1,8-décadiène ou des mélanges de ceux-ci.

9. Procédé selon l'une quelconque des revendications précédentes, dans lequel le mélange réactionnel comprend un agent de transfert de chaîne qui pendant la réaction peut former des radicaux primaires.

10. Procédé selon la revendication 9, dans lequel l'agent de transfert de chaîne est choisi parmi les aldéhydes, les cétones, les alcools, les hydrocarbures saturés, les alpha-oléfines ou des mélanges de ceux-ci.

11. Procédé selon la revendication 10, dans lequel l'agent de transfert de chaîne est choisi parmi le propionaldéhyde, la méthyléthylcétone, le propylène, l'alcool isopropylique ou des mélanges de ceux-ci.

12. Procédé selon l'une quelconque des revendications précédentes, dans lequel l'oléfine polyinsaturée est présente dans le mélange réactionnel alimenté dans la zone de réaction à une concentration de 0,01 à 5 % en poids par rapport au poids total du mélange réactionnel.
